# EUROPÄISCHE PATENTSCHRIFT

(11) **EP 0 968 360 B1**
(45) Veröffentlichungstag und Bekanntmachung des Hinweises auf die Patenterteilung: **18.07.2001**
(21) Anmeldenummer: 98908101.3
(22) Anmeldetag: 19.02.1998
(51) Int. Cl.: F02D 9/10

(54) **SAUGMODUL**
INTAKE MODULE
MODULE D'ASPIRATION

(30) Priorität: 20.03.1997 DE 19711538
(43) Veröffentlichungstag der Anmeldung: 05.01.2000
(73) Patentinhaber: FILTERWERK MANN & HUMMEL GmbH, 71631 Ludwigsburg (DE)
(72) Erfinder: MANGOLD, Christof, D-70825 Münchingen (DE); MAURER, Hermann, D-71720 Oberstenfeld (DE); PIETROWSKI, Herbert, D-74385 Pleidelsheim (DE); DOBUSCH, Heinz, D-71672 Marbach (DE); KLEINEHAKENKAMP, Norbert, D-71287 Weissach (DE); JESSBERGER, Thomas, D-71277 Rutesheim (DE)
(74) Vertreter: Voth, Gerhard, Dipl.-Ing.
(86) Internationale Anmeldenummer: EP9800958
(87) Internationale Veröffentlichungsnummer: WO9842969

(56) Entgegenhaltungen:
- EP-A- 0 174 389
- EP-A- 0 726 388
- DE-A- 2 606 734
- DE-A- 4 133 858
- DE-A- 4 334 180
- DE-A- 19 510 622
- US-A- 4 823 748
- PATENT ABSTRACTS OF JAPAN vol. 18, no. 512 (M-1679), 27.September 1994 & JP 06 173695 A (AISAN IND), 21.Juni 1994,
- PATENT ABSTRACTS OF JAPAN vol. 12, no. 981 (M-680), 31.März 1988 & JP 62 233417 A (MAZDA), 13.Oktober 1987,

## Beschreibung

Die Erfindung betrifft ein Saugmodul, insbesondere für eine Brennkraftmaschine, mit einem Ansaugtrakt mit wenigstens 2 Ansaugkanälen und jeweils einem Schließmittel in einem Ansaugkanal zur Beeinflußung des Durchflußquerschnittes.

Ein derartiges Saugmodul ist z. B. aus der US 4,823,748 bekannt. Dieses Dokument offenbart eine Ansaugvorrichtung für eine Brennkraftmaschine mit wenigstens 2 Ansaugkanälen, wobei jeweils ein Schließmittel in einem der Ansaugkanäle zur Beeinflußung eines Durchflußquerschnittes vorgesehen ist. Diese Schließmittel werden von einem gemeinsamen Betätigungsmittel über Kupplungsmittel angesteuert. Ein Toleranzausgleich zwischen Betätigungsmittel und Schließmittel wird über einen elastischen Bereich erreicht, wobei die Elastizität durch gesonderte elastische Bauteile erzeugt wird.

Die Verwendung der elastischen Bauteile hat den Nachteil, dass ein zusätzlicher Konstruktions- und Montageaufwand entsteht. Hierdurch leidet die Wirtschaftlichkeit der vorgeschlagenen Lösung.

### AUFGABE UND LÖSUNG

Aufgabe der Erfindung ist es, ein Saugmodul mit Schließmitteln in Ansaugkanälen eines Ansaugtraktes zu schaffen, das die Nachteile des Standes der Technik vermeidet, in der Herstellung geringen Aufwand erfordert und eine zuverlässige Funktion sicherstellt.

Diese Aufgabe wird dadurch gelöst, daß der elastizische Bereich im Bereich einer Materialschwächung, vorzugsweise einer Materialverdünnung, Perforierung oder Ausnehmung liegt. Somit wird die Festigkeit an dieser Stelle herabgesetzt und gewissermaßen ein Gelenk bzw. ein Biegebereich oder Elastizitätsbereich geschaffen. Möglich ist auch eine Materialveränderung, beispielsweise eine lokale Erhitzung oder Bestrahlung mit UV-Licht, die zu einer Veränderung bzw. einem Erweichen des betreffenden Bereiches führen können.

Es ist möglich, die Kupplungsmittel mehrteilig auszuführen, bevorzugt sind sie jedoch einteilig, wodurch Herstellungs- und Montageaufwand gesenkt werden können. Bei einer mehrteiligen Ausführung der Kupplungsmittel sind vorteilhaft identische Komponenten verwendbar bzw. zusammensetzbar.

Bei einer bevorzugten Ausführung weisen die Kupplungsmittel wenigstens eine Hauptstange auf, die insbesondere wenigstens einen elastischen Bereich hat. Vorteilhaft kann somit eine Hauptstange wenigstens zwei Schließmittel direkt oder indirekt miteinander verbinden, und besonders bei Kraftübertragung in etwa in ihrer Längsachse schlank und doch ausreichend stabil dimensioniert sein. Zur Reduzierung des Herstellungsaufwandes können die Kupplungsmittel im wesentlichen an den Schließmitteln gelagert sein, da deren Lagerung in den Ansaugkanälen für eine zuverlässige Funktion ohnehin erforderlich ist. Durch diese Art der Lagerung der Kupplungsmittel wird ein möglicher Toleranzausgleich durch Elastizität zwischen Betätigungsmitteln und Schließmitteln verbessert.

Die Kupplungsmittel können Verbindungselemente aufweisen, mittels derer sie insbesondere gelenkig mit den Schließmitteln verbindbar sind, wobei die Verbindungselemente vorzugsweise etwa senkrecht von den Kupplungsmitteln abstehen. Somit brauchen die Kupplungsmittel nicht direkt an den Schließmitteln zu verlaufen. Dabei können die Verbindungselemente als Zweigstangen ausgeführt sein. Durch eine senkrecht abstehende Verbindung ergibt sich eine besonders einfache Möglichkeit zur Einrichtung eines elastischen Bereichs, der die Verbindungselemente umfaßt, wobei er vorzugsweise von deren Anfang bis zu ihrem Ende reicht. Die Elastizität ergibt sich hierbei nicht als Zusammenstauchen von länglichen Kupplungsmitteln in Längsrichtung, sondern entsteht durch eine Verbiegung lediglich der Verbindungselemente. Auf diese Weise kann eine inhärente Elastizität geschaffen werden, insbesondere bei formsteif mit vorzugsweise einstückig ausgeführten Kupplungsmitteln verbundenen Verbindungselementen. Diese lassen sich in Querrichtung leichter verbiegen.

Bei einer alternativen Ausgestaltung ist es möglich, daß die Verbindungselemente elastisch oder gelenkig mit einer Hauptstange und/oder weiteren Komponenten der Kupplungsmittel verbunden sind, wobei sie vorzugsweise formsteif ausgeführt sind und der elastische Bereich in der Verbindung vorgesehen ist. Eine derartige Verbindung kann beispielsweise in einem Verbindungsbereich mit einem dünnen oder eine Elastizität bildenden Querschnitt ausgeführt sein.

Als Schließmittel kommen bevorzugt Klappen zum Einsatz, insbesondere im wesentlichen runde Klappen, die um eine Achse drehbar sind. Derartige Klappen sind leicht herstell- und einbaubar und versperren aufgrund ihres relativ geringen Querschnittes in der OFFEN-Stellung nur einen geringen Teil des Durchflußquerschnittes eines Ansaugkanales. Vorzugsweise sind sie über Anlenkhebel und Kugelgelenke von den Kupplungsmitteln bzw. den Verbindungselementen anlenkbar.

Eine Ausführung der Kupplungsmittel zusammen mit Verbindungselementen ermöglicht einen Aufbau, bei dem ein Teil der Kupplungsmittel im wesentlichen in Längsrichtung bewegt und belastet wird, während mit davon ausgehenden Verbindungselementen Schließmittel mit jeweils unterschiedlichem Abstand von den Kupplungsmitteln anlenkbar sind.

Bevorzugt nehmen alle Schließmittel im wesentlichen die gleiche Stellung ein, wobei insbesondere zwei Stellungen vorgesehen sind, vorzugsweise mittels des Toleranzausgleiches erreichbar eine GESCHLOSSEN- und OFFEN-Stellung, die jeweils durch Anschläge für die Schließmittel bestimmt sind. Somit können einzelne Schließmittel gegen eine Endstellung gedrückt und mittels der Kupplungsmittel weiter belastet werden, um weitere, noch nicht vollständig in derselben Stellung befindliche, ebenfalls gegen deren Anschläge zu drücken. Dann kann die von den Betätigungsmitteln auf die Schließmittel bzw. Klappen ausgeübte Kraft reduziert bzw. abgestellt werden.

Möglich sind rotatorisch arbeitende Betätigungsmittel und eine im wesentlichen translatorische Bewegung der Kupplungsmittel, wobei vorzugsweise über einen Exzenterzapfen an den Betätigungsmitteln und eine Ausnahmeöffnung an den Kupplungsmitteln eine Umsetzung der Dreh- in eine Längsbewegung erfolgt, insbesondere im wesentlichen in Richtung der Längsachse der Kupplungsmittel, wobei die Betätigungsmittel von einem Stellmotor samt Getriebe gebildet werden können.

Bei einer mehrteiligen Ausführung der Kupplungsmittel bestehen sie bevorzugt aus mehreren Hauptstangen mit davon abgehenden Schenkeln als Verbindungselemente für Schließmittel in Form von Klappen. Dabei können die Hauptstangen untereinander gelenkig verbunden sein, der elastische Bereich beispielsweise als Materialverdünnung in der Verbindung mit den Schenkeln ausgeführt sein und vorzugsweise die Betätigung von zwei Hauptstangen, mit denen jeweils zwei Klappen verbunden sind, durch eine mit den zwei Hauptstangen verbundene dritte Hauptstange erfolgen. Vorteilhaft sind die Hauptstangen im wesentlichen identisch ausgeführt, um Herstellungs- und Montageaufwand zu senken.

Alternativ ist es möglich, die Kupplungsmittel einteilig mit einer Hauptstange und davon senkrecht abstehenden Zweigstangen zur Verbindung mit den Schließmitteln in einem Ansaugkanal auszuführen. Dabei kann sich der elastische Bereich als Querschnittsveränderung bzw. -verjüngung der Zweigstangen im Vergleich zur Hauptstange über die gesamte Länge der Zweigstangen erstrecken, wobei durch deren senkrechte Anordnung Elastizität erreicht werden kann. Die Querschnittsverjüngung kann ebenso nur in einem begrenzten Bereich, vorzugsweise dem Verbindungsbereich, als Gelenk ausgebildet sein. Die Bewegung erfolgt im wesentlichen in Richtung der Hauptstange.

Die Kupplungsmittel und/oder die Verbindungselemente sind vorzugsweise im Spritzgußverfahren, beispielsweise aus Kunststoff, gefertigt. Besonders bevorzugt wird ein thermoplastischer Kunststoff verwendet, der je nach Steifigkeit bzw. Elastizität mit verschiedenen und unterschiedlich orientierten Querschnitten bzw. Profilen versehen ist.

Zur Zuführung von Gasen aus der Kurbelgehäuselüftung der Abgasrückführung oder der Tankentlüftung zu einem Ansaugkanal kann jedem Ansaugkanal ein Ringspalt zugeordnet sein. Dies stellt eine einfache Art der Gaszuführung dar.

Bevorzugt ist an der der Brennkraftmaschine zugewandten Stirnseite des Saugmoduls eine Dichtung, vorzugsweise aus elastischem Material, als toleranzausgleichendes Element vorgesehen. Mittels dieser Dichtung wird sowohl ein die Klappen enthaltener Einsatz in dem Ansaugkanal gegen das Saugmodul bzw. gegen den Ansaugkanal als auch das Saugmodul gegen die Brennkraftmaschine gedrückt und diese Verbindungen gasdicht abgeschlossen.

Das Saugmodul ist bevorzugt aus einem Kunststoffspritzteil bzw. mehreren miteinander verbundenen Spritzgießteilen hergestellt. Dies bedeutet erhebliche Gewichstvorteile gegenüber metallischen Saugmodulen, des weiteren läßt es sich einfach einer Wiederverwertung zuführen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Zwei Ausführungsbeispiele der Erfindung sind in den Zeichnungen dargestellt und werden im folgenden näher erläutert. In den Zeichnungen zeigen:
- Fig. 1: einen Längsschnitt durch ein erfindungsgemäßes Saugmodul mit mehrteiligen Kupplungsmitteln,
- Fig. 2: die Anordnung der Klappen in dem jeweiligen Kanal eines Saugmoduls,
- Fig. 3: eine Detaildarstellung des Saugmoduls,
- Fig. 4: einen Querschnitt durch das Saugmodul aus Fig. 1 zur Verdeutlichung der Lagerung einer Schließklappe samt Kupplungsmitteln und Klappenantrieb und
- Fig. 5: Schrägansicht von einteilig ausgeführten Kupplungsmitteln samt daran befestigten Klappen.

### BESCHREIBUNG ZWEIER BEVORZUGTER AUSFÜHRUNGSBEISPIELE

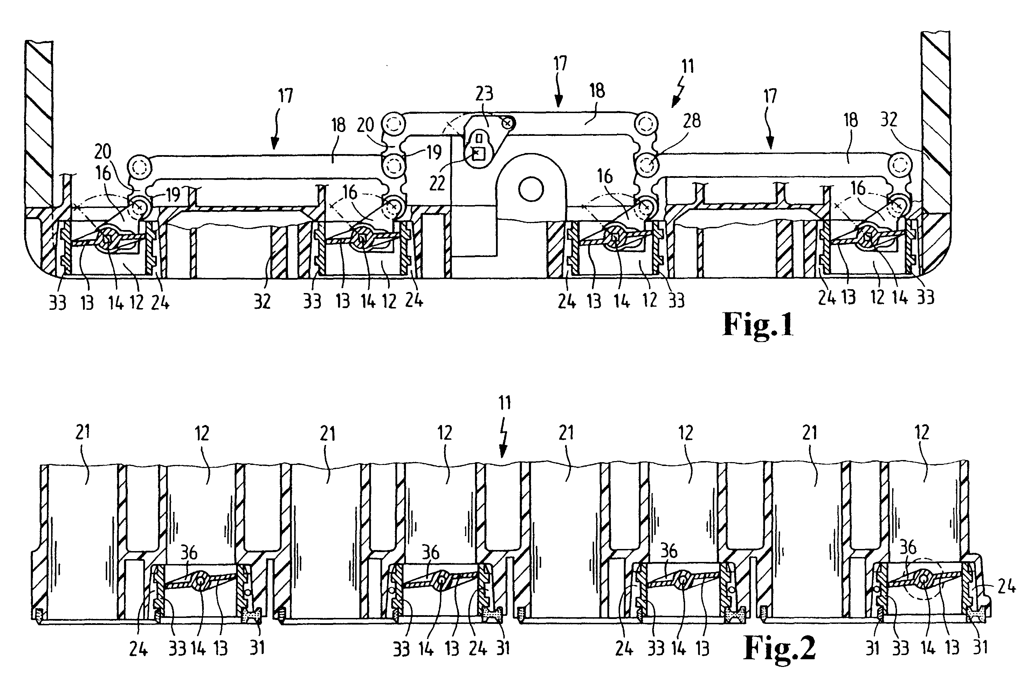

Die Fig. 1 zeigt ein erfindungsgemäßes Saugmodul 11 im Längsschnitt, wobei nur die zuschaltbaren Ansaugkanäle 12 gezeigt sind. In diesen Ansaugkanälen 12 befinden sich in Seitenansicht dargestellte Klappen 13, die an einer in Klappenebene durch deren Mittelpunkt gehenden Achse 14 drehbar gelagert sind. In der in der Fig. 1 dargestellten Stellung, die bei allen Klappen 13 dieselbe ist, verschließen sie die Ansaugkanäle 12 vollständig.

An einem Ende der Achse 14 befindet sich ein etwa dreieckförmiger Anlenkhebel 16, über den die Klappen 13 um die Achse drehbar betätigt werden können. Es ist im Rahmen der Erfindung ebenso möglich, den elastischen Bereich hier vorzusehen. So kann entweder der Anlenkhebel 16 elastisch sein, oder aber bevorzugt die Achse 14 für eine begrenzte Torsion mit einer gewissen Elastizität ausgestaltet sein, beispielsweise durch Verwendung eines geeigneten Materials oder durch eine Querschnittsverjüngung als elastischen Bereich.

Eine Einleitung der Bewegung erfolgt über Hauptstangen 17, von denen eine die beiden linken und eine andere die beiden rechten Klappen miteinander verbindet. Über eine dritte Hauptstange 17 wiederum sind die beiden äußeren Hauptstangen verbunden, wobei durch diese mittlere Hauptstange die Bewegung eingeleitet wird.

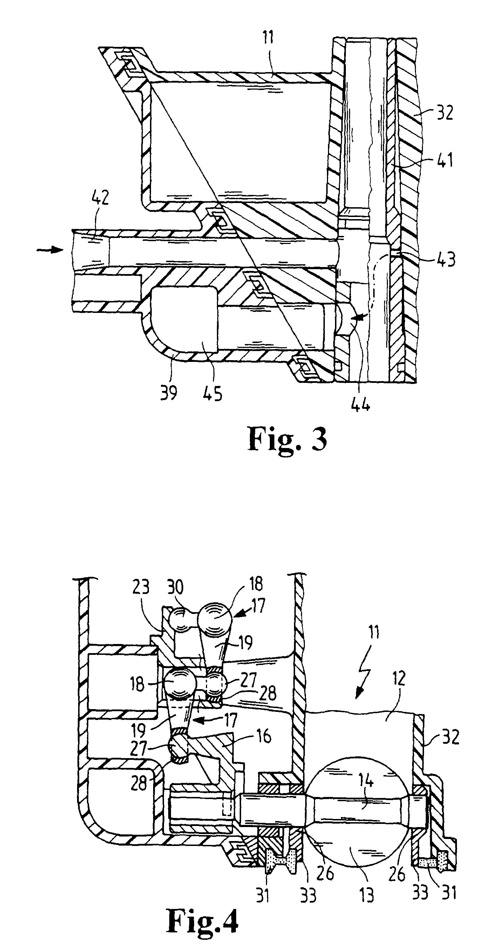

Alle drei Hauptstangen 17 sind im wesentlichen identisch ausgeführt, mit einem geraden Hauptteil 18, von dessen beiden Enden zwei kurze Schenkel 19 als Verbindungselemente etwa senkrecht abstehen. Die Verbindungsstelle zwischen den Schenkeln 19 und dem Hauptteil 18 ist deutlich erkennbar mit verringertem Querschnitt als elastischer Bereich durch eine Materialverdünnung 20 ausgeführt. Auf diese Weise wird eine elastische Bewegbarkeit der Schenkel 19 gegenüber dem Hauptteil 18 in gewissen Grenzen erreicht, die sich in diesem Fall in etwa als Verschwenkung der Schenkel um die Materialverdünnung 20 als Gelenk darstellt. An ihren äußeren Enden sind die Schenkel 19 mit den Anlenkhebeln 16 verbunden, wie in Fig. 4 im Detail gezeigt wird. Da bei der in der Fig. 1 dargestellten Anordnung im wesentlichen nur Kräfte in der Zeichenebene und hier wiederum hauptsächlich in Richtung der Hauptteile 18 auftreten, spielt nur eine in dieser Ebene bzw. in dieser Richtung wirksame Elastizität eines elastischen Bereichs der Hauptstangen 17 als Kupplungsmittel eine Rolle.

Der Antrieb der Kupplungsmittel erfolgt über einen nicht dargestellten Stellmotor mit Getriebe, auf dessen mit quadratischem Querschnitt ausgeführter Abtriebsachse 22 ein Anlenkteil 23 aufgesetzt ist, das im Vergleich zur Abtriebsachse exzentrisch mit dem Hauptteil 18 der mittleren Hautpstange 17 verbunden ist.

Strichpunktiert ist in der Fig. 1 der Verschwenkungsbogen des Anlenkteils 23 dargestellt, ebenso wie bei jeder der Klappen 13. Man erkennt, daß eine Verschwenkung um etwa 90° entgegen dem Uhrzeigersinn möglich ist. Die Bewegung der Hauptstangen 17 setzt sich dabei aus rotatorischen und translatorischen Komponenten zusammen, wobei durch die geometrisch gleichen Verhältnisse des Anlenkteils 23 sowie der Anlenkhebel 16 diese eine identische Bewegung ausführen. Man erkennt, daß bei einer Drehung um 90° entgegen dem Uhrzeigersinn die Klappen 13 in Fig. 1 senkrecht stehen und somit in etwa in Richtung des Ansaugkanals 12 verlaufen, und einen maximal freien Durchflußquerschnitt freigeben. Zwischen der Wandung des Ansaugkanals 12 und der des Saugmoduls 11 ist deutlich ein Ringspalt 24 erkennbar, durch den Kurbelgehäusegase oder Kraftstoffdämpfe dem Motor zugeführt werden können.

Der Hauptteil 18 der Hauptstange 17 ist bzgl. einer Krafteinwirkung in seiner Längsrichtung starr ausgeführt. Ebenso wie die Schenkel 19 mit den Anlenkhebeln 16 sind die Hauptstangen 17 untereinander durch Kugelgelenke verbunden, siehe Fig. 4. Die mittelere Hauptstange 17 unterscheidet sich von den äußeren beiden nur dadurch, daß sie in etwa in der Mitte drehbar mit dem Anlenkstück 23 verbunden ist.

In Fig. 2 ist das Saugmodul 11 im Schnitt gezeigt, wobei die Schnittebene durch die Mitte der Klappen 13 verläuft. Auch hier sind die Klappen in der GESCHLOSSEN-Stellung zu erkennen.

Fig. 3 zeigt eine Detaildarstellung des Saugmoduls 11, das über eine Schweißverbindung mit einem Trägerteil 39 verbunden ist. Im Saugmodul 11 befindet sich eine Buchse 41, bevorzugt aus Metall, über die sich das Saugmodul an dem Zylinderkopf einer Brennkraftmaschine befestigen läßt. Kurbelgehäusegase, welche in den Brennraum rückgeführt werden müssen, treten über die Öffnung 42 ein, werden über die Öffnung 43 in den Hohlraum der Buchse 41 geleitet und strömen von dort über die Öffnung 44 in einen Verteilerkanal 45. Vom Verteilerkanal 45 gelangen sie, wie in Fig. 2 dargestellt, zu dem jeweiligen Ringspalt 24.

Die Fig. 4 zeigt das Saugmodul aus Fig. 1 im Querschnitt, wobei sich die Klappe 13 im Gegensatz zu Fig. 1 in der OFFEN-Stellung befindet und der Ansaugkanal 12 größtmöglichen Durchflußquerschnitt aufweist. Deutlich ist die runde Form der als Schließmittel wirkenden Klappe zu erkennen. Die Achse 14 ist an beiden Enden in Kunststofflagerbuchsen 26 gelagert, die bevorzugt aus selbstschmierendem Kunststoff bestehen können, beispielsweise etwa POM (PolyoxyMethylen). An ihrem in Fig. 4 links über die Kunststofflagerbuchse 26 überstehenden Ende, das mit quadratischem Querschnitt versehen ist, ist der Anlenkhebel 16 angebracht. Er weist einen abstehenden Kugelzapfen 27 auf, der in eine Kugelgelenkslagerbuchse 28 des Schenkels 19 eingreift. Wie man an der Profilaufsicht der Hauptstange 17 erkennt, weist diese eine Verjüngung von dem Hauptteil 18 zu dem Schenkel 19 auf. Somit kann auch hier eine elastische bzw. formweiche Gestaltung der Hauptstange 17 erfolgen.

Von der zwei Klappen 13 miteinander verbindenden Hauptstange 17 geht an ihrem Ende ein weiterer Kugelzapfen 27 ab, der wiederum in eine Kugelgelenklagerbuchse 28 des Schenkels 19 der mittleren Hauptstange 17 eingreift. Auf diese Weise sind die Klappen 13 über die Anlenkhebel 16 mit den Hauptstangen 17 jeweils über Kugelgelenke verbunden, wodurch toleranzausgleichende Bewegungen nicht nur in der Ebene der Fig. 1 möglich sind. Über einen Anlenkzapfen 30 an dem Anlenkteil 23 wird die mittlere Hauptstange 17 von einem nicht dargestellten Stellmotor angetrieben. Der gesamte Ansteuermechanismus ist in einem Gehäuse integriert und damit keiner Verschmutzung bzw. keinen Gasen ausgesetzt, wodurch hohe Betriebssicherheit erreicht wird.

An der Unterseite des Saugmoduls 11 ist den Ansaugkanal 12 umgebend eine Dichtung 31 als toleranzausgleichendes Element zwischen einem Klappenträger 33, der die Kunststofflagerbuchsen 26 enthält, und der Grundstuktur bzw. dem Gehäuse 32 des Saugmoduls 11 vorgesehen. Auf diese Weise ist ein in das Gehäuse 32 einsetzbarer Schließmittelträger möglich, der besonders gut durch eine runde Klappe 13 verschließbar oder stufenlos öffenbar ist. Dies bietet den Vorteil, daß im Gegensatz zu dem übrigen Gehäuse 32 des Saugmoduls 11 wie auch dem Ansaugkanal 12 nur der Klappenträger 33 mit geringen Bauteiltoleranzen zu fertigen ist, um eine zuverlässige Abdichtung durch die Klappe 13 zu erzielen.

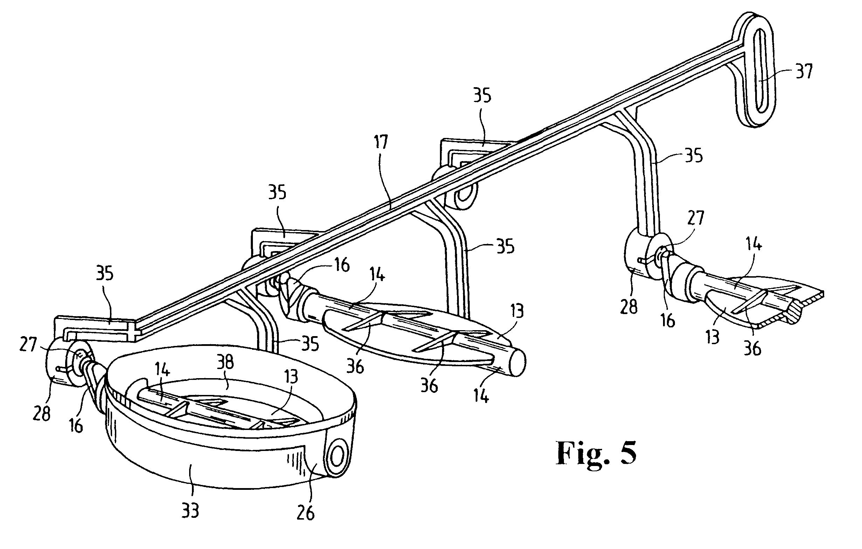

Abweichend von dem in den Fig. 1 und 4 dargestellten Aufbau der Kupplungsmittel ist in der Fig. 5 eine einstückige Ausführung in Schrägansicht dargestellt, die jedoch ohne weiteres gegen die andere Version austauschbar ist. Sie besteht aus einer langgestreckten Hauptstange 17, von der jeweils nach links hinten und rechts vorne drei Zweigstangen 35 senkrecht abgehen. Sowohl die Hauptstange 17 als auch die Zweigstangen 35 weisen jeweils einen konstanten Querschnitt auf, der wie bei der Hauptstange zu sehen beispielsweise als Kreuzrippung ausgeführt sein kann.

Die Elastizität in den Zweigstangen wird allein durch die Wahl eines geeigneten Querschnittes erzielt, der über die gesamte Länge von der Verbindung zur Hauptstange bis zu den Kugelgelenkslagerbuchsen gleich bleibt, wobei die nach hinten abstehenden Zweigstangen einen anderen Querschnitt aufweisen als die nach vorne abstehenden. Querschnitt und Länge der Zweigstangen 35 sind so ausgeführt, daß allen Kugelgelenkslagerbuchsen 28 an den Enden der Zweigstangen jeweils die gleiche Elastizität gegenüber der Hauptstange 17 gegeben ist. Dies bedeutet auf die Fig. 5 bezogen, daß die nach hinten abgehenden Zweigstangen 35 aufgrund ihrer deutlich geringeren Länge einen geringeren und somit eine höhere Elastizität bedingenden Querschnitt aufweisen als die nach vorne abgehenden Zweigstangen. Diese sind länger, und deswegen ist ihr Querschnitt stärker und weniger elastisch ausgeführt, beispielsweise durch eine die Steifigkeit erhöhende Querverrippung. Eine zusätzliche Beeinflussung bzw. Erhöhung der Elastizität kann durch die mit einem bestimmten Winkel ausgeführte Abbiegung im Verlauf der Zweigstangen 35 erzielt werden, die bei den kurzen Zweigstangen etwa 90° beträgt, und bei den lagen etwa 135°.

Ähnlich wie in den vorhergehenden Figuren sind mittels Kugelzapfen 27 Anlenkhebel 16 in den Kugelgelenklagerbuchsen 28 gelagert befestigt, die auf Achsen 14 von Klappen 13 sitzen. Wie in Fig. 5 zu erkennen ist, können dabei Klappe 13 und Achse 14 einstückig bzw. aus einem Guß bestehen, evtl. sogar mit angeformtem Anlenkhebel 16. Zur Erhöhung der Steifigkeit der Klappen 13 sind Verstärkungsrippen 36 vorgesehen.

Die Fig. 5 zeigt die Lagerung einer Klappe 13 in einem Klappenträger 33, der aus einem oben beschriebenen Kunststoffmaterial bestehen und in etwa als rohrförmiger Abschnitt ausgeformt sein kann. An seinem rechten Teil ist eine der Kunststofflagerbuchsen 26 zu sehen, in der das rechte Ende der Achse 14 gelagert ist. Er weist einen in etwa wulstförmig an seiner Innenwandung hervortretenden Anschlag 38 auf, der sich einen halben Kreisbogen bildend zwischen den Lagerbuchsen 26 erstreckt. Die Klappe 13 schlägt von unten gegen ihn an, so daß in diesem Fall eine Betätigung der Kupplungsmittel im Uhrzeigersinn bzw. nach rechts hinten erfolgt. Der den anderen halben Kreisbogen bildende Anschlag befindet sich dann unterhalb der Klappe, so daß sie von oben gegen ihn anliegt. Die Klappe dichtet in der jeweiligen Stellung gegen diese Anschläge den Ansaugkanal ab. Der Klappenträger 33 wird in das Gehäuse 32 des Saugmoduls 11 eingesetzt und vorzugsweise durch eine Dichtung 31 gegen dieses abgedichtet.

Zum Antrieb weist die Hauptstange 17 an ihrem rechten Ende eine in etwa senkrecht dazu verlaufende Aufnahmeöffnung 37 auf, in die ein Anlenkzapfen 30 bzw. ein Exzenterzapfen eines Stellantriebes zur Betätigung eingreift. Die Bewegung der Hauptstange 17 sowie der Anlenkhebel 16 und der Klappen 13 erfolgt ähnlich wie in Fig. 1 beschrieben.

### FUNKTION

Zum Zusammenbau werden in das Gehäuse 32 des Saugmoduls 11 die die Klappen 13 aufnehmenden Klappenträger 33 in die Ansaugkanäle 12 eingesetzt. An die auf die Achsen 14 der Klappen 13 angebrachten bzw. angeformten Anlenkhebel 16 werden die Hauptstangen 17 mittels der Kugelgelenksverbindungen aufgesteckt, was sowohl bei den Ausführungen nach Fig. 1 als auch nach Fig. 5 weitgehend gleich erfolgt. Anschließend werden die Kupplungsmittel mit dem Stellantrieb verbunden, beispielsweise über einen Anlenkzapfen 30, der in eine Aufnahmeöffnung 37 an den Kupplungsmitteln bzw. einer Hauptstange 17 eingreift. Somit sind die Kupplungsmittel bzw. die Hauptstange 17 samt Schenkeln 19 bzw. Zweigstangen 35 nur an den Klappen 13 und evtl. noch an dem Anlenkzapfen 30 des Stellantriebes gelagert, weitere Lagerungen können entfallen.

Die rotatorisch wirkende Betätigung des Stellantriebes wird in eine im wesentlichen aus rotatorischen und translatorischen Komponenten bestehende Bewegung der Hauptstange/en 17 umgesetzt, wobei die an den Enden der Schenkel 19 bzw. Zweigstangen 35 befindlichen Kugelgelenklagerbuchsen 28 eine der Bewegung des Anlenkzapfens 30 entsprechenden Kreisbogen nachfahren. Daraus folgt eine rein rotatorische Bewegung der Anlenkhebel 16 sowie der damit über die Achse 14 verbundenen Klappen 13. Dieser Kreisausschnitt erstreckt sich vorzugsweise über 90°, wobei die beiden maximalen Endstellungen jeweils eine GESCHLOSSEN-Stellung und eine OFFEN-Stellung sind. In den Klappenträgern 33 können Anschläge vorhanden sein, die eine Bewegung der Klappen nicht über eine der beiden Endstellungen hinaus bewirken.

Die Erfindung ist mit derartigen Anschlägen besonders vorteilhaft kombinierbar, da beispielsweise etwas in der Stellung vorauseilende Klappen 13 bereits die durch die Anschläge vorgegebene Endstellung erreichen, während durch eine weiterlaufende Bewegung der Kupplungsmittel sämtliche noch weiter drehbare Klappen ebenfalls gegen die Anschläge in ihre Endstellungen laufen können. Durch die erfindungsgemäße Elastizität zwischen Schließmitteln bzw. Klappen 13 und Betätigungsmitteln bzw. Stellantrieb wird die weitere Bewegung der Kupplungsmittel bei einer schon am Anschlag befindlichen Klappe ermöglicht, die Elastizität gleicht somit die Toleranz zwischen den Stellungen bzw. den Anschlägen der Endstellungen der Klappen aus. Somit brauchen die Klappen 13 nicht zu jedem Zeitpunkt exakt die gleiche Stellung aufzuweisen, da diese durch den Toleranzausgleich infolge der Elastizität in den beiden wichtigen Stellungen, der GESCHLOSSEN- und der OFFEN-Stellung, automatisch erzielt wird.

Eine alternative Realisierung der Elastizität könnte auch in einer längs der translatorischen Bewegung der Kupplungsmittel stattfindenden Elastizität, beispielsweise als Längsfederung der Hauptstange 17, erfolgen. Möglich wäre hier eine teleskopartige, federnde Ausführung. Der große Vorteil der in den Figuren 1 und 5 dargestellten Ausführungen der Kupplungsmittel besteht jedoch darin, daß sie ohne zusätzlich vorhandene Federn oder federnde Elemente auskommen, da die Elastizität jeweils inhärent in den Kupplungsmitteln gegeben ist. Besonders vorteilhaft ist hier die Ausführung nach Fig. 5, da die Kupplungsmittel einstückig herstellbar sind, wodurch sich der Montageaufwand verringert.

## Patentansprüche

1. Saugmodul, insbesondere für Brennkraftmaschinen, mit einem Ansaugtrakt mit wenigstens zwei Ansaugkanälen (12) und jeweils einem Schließmittel (13, 14) in einem Ansaugkanal zur Beeinflussung eines Durchflußquerschnittes, wobei wenigstens zwei Schließmittel von gemeinsamen Betätigungsmitteln über Kupplungsmittel (17, 18, 35) betätigbar sind, und wobei die Kupplungsmittel für einen Toleranzausgleich zwischen Betätigungsmitteln und Schließmitteln wenigstens einen elastischen Bereich aufweisen, dadurch gekennzeichnet, daß der elastische Bereich im Bereich einer Materialschwächung, vorzugsweise einer Materialverdünnung (20), Perforierung oder Ausnehmung liegt.

2. Saugmodul nach Anspruch 1, gekennzeichnet durch wenigstens ein elastisches Gelenk zwischen Betätigungsmitteln, Kupplungsmitteln und / oder Schließmitteln.

3. Saugmodul nach einem der vorhergehenden Ansprüche, dadurch gekennzeichnet, daß die Kupplungsmittel mehrteilig sind.

4. Saugmodul nach einem der Ansprüche 1 bis 2, dadurch gekennzeichnet, daß die Kupplungsmittel einteilig sind.

5. Saugmodul nach einem der vorhergehenden Ansprüche, dadurch gekennzeichnet, daß die Kupplungsmittel wenigstens eine Hauptstange (17) aufweisen, insbesondere mit wenigstens einem elastischen Bereich, und vorzugsweise im wesentlichen an den Schließmitteln gelagert sind.

6. Saugmodul nach einem der vorhergehenden Ansprüche, dadurch gekennzeichnet, daß die Kupplungsmittel Verbindungselemente, insbesondere Zweigstangen (35), aufweisen, mittels derer sie insbesondere gelenkig mit den Schließmitteln verbunden sind, wobei die Verbindungselemente von den Kupplungsmitteln vorzugsweise etwa senkrecht abstehen.

7. Saugmodul nach Anspruch 6, dadurch gekennzeichnet, daß der elastische Bereich die Verbindungselemente umfaßt, die insbesondere formsteif mit den vorzugsweise einteilig ausgeführten Kupplungsmitteln verbunden sind, wobei er sich insbesondere über deren gesamte Länge erstreckt.

8. Saugmodul nach Anspruch 6, dadurch gekennzeichnet, daß die Verbindungselemente elastisch oder gelenkig mit einer Hauptstange (17) und/oder weiteren Komponenten der Kupplungsmittel verbunden sind, wobei sie vorzugsweise formsteif ausgeführt sind und der elastische Bereich in der Verbindung liegt.

9. Saugmodul nach einem der vorhergehenden Ansprüche, dadurch gekennzeichnet, daß die Schließmittel Klappen, insbesondere im wesentlichen runde Klappen (13), sind, die um eine Achse (14) drehbar sind, wobei sie vorzugsweise über Anlenkhebel (16) und Kugelgelenke (27,28) von den Kupplungsmitteln bzw. den Verbindungselementen anlenkbar sind.

10. Saugmodul nach einem der vorhergehenden Ansprüche, dadurch gekennzeichnet, daß alle Schließmittel im wesentlichen die gleiche Stellung einnehmen, wobei insbesondere zwei Stellungen vorgesehen sind, vorzugsweise mittels des Toleranzausgleiches erreichbar eine GESCHLOSSEN- und eine OFFEN-Stellung, die jeweils durch Anschläge bestimmt sind.

11. Saugmodul nach einem der vorhergehenden Ansprüche, gekennzeichnet durch rotatorisch arbeitende Betätigungsmittel und eine im wesentlichen translatorische Bewegung der Kupplungsmittel, wobei vorzugsweise über einen Exzenterzapfen oder Anlenkzapfen (30) an den Betätigungsmitteln und eine Aufnahmeöffnung (37) an den Kupplungsmitteln eine Umsetzung in eine Längsbewegung erfolgt, insbesondere im wesentlichen in Richtung der Längsachse der Kupplungsmittel.

12. Saugmodul nach einem der Ansprüche 3 oder 7 bis 11, dadurch gekennzeichnet, daß die Kupplungsmittel aus mehreren Hauptstangen (17) bestehen mit davon abgehenden Zweigstangen (35) als Verbindungselemente für Schließmittel in Form von Klappen (13), wobei die Hauptstangen untereinander gelenkig verbunden sind und der elastische Bereich als Materialverdünnung (20) in der Verbindung mit den Schenkeln liegt, und wobei die Betätigung von zwei Hauptstangen, mit denen jeweils zwei Klappen verbunden sind, durch eine mit den zwei Hauptstangen verbundene dritte Hauptstange erfolgt, wobei vorzugsweise die Hauptstangen identisch sind.

13. Saugmodul nach einem der Ansprüche 4 bis 11, dadurch gekennzeichnet, daß die Kupplungsmittel einteilig mit einer Hauptstange (17) und davon senkrecht abstehenden Zweigstangen (35) zur Verbindung mit den Schließmitteln in Form von Klappen (13) ausgeführt sind, wobei sich der elastische Bereich als Querschnittsverjüngung der Zweigstangen im Vergleich zur Hauptstange und deren senkrechte Anordnung daran ausgebildet ist, und wobei die Betätigung über einen Stellmotor mit einem antriebsseitigen Exzenterzapfen (30) und eine senkrecht zu der Hauptstange verlaufende, angeformte Aufnahmeöffnung (37) im wesentlichen in Richtung der Hauptstange erfolgt.

14. Saugmodul nach einem der vorhergehenden Ansprüche, dadurch gekennzeichnet, daß die Kupplungsmittel und/oder Verbindungselemente vorzugsweise im Spritzgußverfahren aus Kunststoff gefertigt sind, insbesondere aus einem thermoplastischen Kunststoff.

15. Saugmodul nach einem der vorhergehenden Ansprüche, dadurch gekennzeichnet, daß jedem Ansaugkanal (12) ein Ringspalt (24) zugeordnet ist, welchem Gase aus der Kurbelgehäuselüftung der Abgasrückführung oder der Tankentlüftung zuführbar sind.

16. Saugmodul nach einem der vorhergehenden Ansprüche, dadurch gekennzeichnet, daß an der der Brennkraftmaschine zugewandten Stirnseite des Saugmoduls (11) eine Dichtung (31) als toleranzausgleichendes Element vorgesehen ist, vorzugsweise zwischen einem Klappenträger (33) als Einsatz in einem Ansaugkanal (12) und dem Gehäuse des Saugmoduls (32).

## Claims

1. Intake module, more especially for internal combustion engines, including an intake duct provided with at least two induction ports (12) and a respective closing means (13, 14) in each induction port for influencing a throughflow cross-section, at least two closing means being actuatable by common actuating means via coupling means (17, 18, 35), and the coupling means having at least one resilient region for equalising tolerances between actuating means and closing means, characterised in that the resilient region lies in the region of a weak part of the material, preferably a thinner part of the material (20), a perforation or recess.

2. Intake module according to claim 1, characterised by at least one resilient joint between actuating means, coupling means and/or closing means.

3. Intake module according to one of the preceding claims, characterised in that the coupling means comprise a plurality of component parts.

4. Intake module according to one of claims 1 to 2, characterised in that the coupling means comprise one component part.

5. Intake module according to one of the preceding claims, characterised in that the coupling means include at least one main rod (17), more especially having at least one resilient region, and they are preferably mounted substantially on the closing means.

6. Intake module according to one of the preceding claims, characterised in that the coupling means include connecting elements, more especially branch rods (35), by means of which they are connected, more especially pivotally, to the closing means, the connecting elements protruding from the coupling means preferably substantially perpendicularly.

7. Intake module according to claim 6, characterised in that the resilient region includes the connecting elements, which are more especially rigidly connected to the coupling means, which have a preferably one-part configuration, said region extending more especially over the entire length thereof.

8. Intake module according to claim 6, characterised in that the connecting elements are resiliently or pivotally connected to a main rod (17) and/or to additional components of the coupling means, said means preferably having a rigid configuration, and the resilient region lying at the junction.

9. Intake module according to one of the preceding claims, characterised in that the closing means are flaps, more especially substantially round flaps (13), which are rotatable about a spindle (14), said means preferably being pivotable via pivotal levers (16) and ball-and-socket joints (27, 28) by the coupling means or resp. by the connecting elements.

10. Intake module according to one of tie preceding claims, characterised in that all of the closing means assume substantially the same position, two positions being more especially provided, a CLOSED position and an OPEN position which are each determined by stop members being achievable preferably by means of the tolerance equalising means.

11. Intake module according to one of the preceding claims, characterised by rotationally operating actuating means and a substantially translatory movement of the coupling means, a transition into a longitudinal movement being preferably effected via an eccentric pin or pivot pin (30) on the actuating means and via a receiving aperture (37) on the coupling means, said movement being more especially substantially in the direction towards the longitudinal axis of the coupling means.

12. Intake module according to one of claims 3 or 7 to 11, characterised in that the coupling means comprise a plurality of main rods (17), with branch rods (35), protruding therefrom, as connecting elements for closing means in the form of flaps (13), the main rods being pivotally interconnected, and the resilient region lying as a thinner part of the material (20) in the connection with the legs, and two main rods, by means of which two respective flaps are connected, being actuated by a third main rod, which is connected to the two main rods, the main rods preferably being identical.

13. Intake module according to one of claims 4 to 11, characterised in that the coupling means have a one-part configuration with a main rod (17) and branch rods (35) protruding perpendicularly therefrom for connection with the closing means in the form of flaps (13), the resilient region being configured as a cross-sectional tapering of the branch rods in comparison with the main rod and the perpendicular disposition thereof thereon, and the actuation being effected via a setting motor with an eccentric pin (30) on the driving side and a moulded-on receiving aperture (37), which extends perpendicularly relative to the main rod, substantially in the direction towards the main rod.

14. Intake module according to one of the preceding claims, characterised in that the coupling means and/or connecting elements are preferably produced from plastics material by an injection-moulding method, more especially from a thermoplastic plastics material.

15. Intake module according to one of the preceding claims, characterised in that an annular clearance (24) is associated with each induction port (12), and gases from the crankcase breathing pipe of the exhaust gas return system or from the tank aeration system can be supplied to said clearance.

16. Intake module according to one of the preceding claims, characterised in that a seal (31) is provided as the tolerance equalising element on the end face of the intake module (11) facing the internal combustion engine, preferably between a flap carrier (33), as the insert in an induction port (12), and the housing (32) of the intake module (32).

## Revendications

1. Module d'aspiration, en particulier pour moteurs à combustion interne, comportant une aile d'aspiration avec au moins deux canaux d'aspiration (12) contenant chacun un moyen de fermeture (13, 14) agissant sur la section de l'écoulement du canal, au moins deux moyens de fermeture pouvant être actionnés par des organes de manoeuvre communs par l'intermédiaire de moyens d'accouplement (17, 18, 35) qui, pour compenser les tolérances entre les organes de manoeuvre et les moyens de fermeture présentent au moins une zone élastique,
caractérisé en ce que
la zone élastique est une zone où se trouve un affaiblissement de la matière, de préférence un amincissement (20), une perforation ou un évidement.

2. Module d'aspiration selon la revendication 1,
caractérisé en ce qu'
il comporte au moins une articulation élastique entre les organes de manoeuvre, les moyens d'accouplement et/ou les moyens de fermeture.

3. Module d'aspiration selon au moins l'une quelconque des revendications précédentes,
caractérisé en ce que
les moyens d'accouplement sont en plusieurs parties.

4. Module d'aspiration selon la revendication 1 ou 2,
caractérisé en ce que
les moyens d'accouplement sont monoblocs.

5. Module d'aspiration selon l'une quelconque des revendications précédentes,
caractérisé en ce que
les moyens d'accouplement comprennent au moins une barre principale (17) présentant notamment au moins une zone élastique, et sont montés de préférence essentiellement sur les moyens de fermeture.

6. Module d'aspiration selon l'une quelconque des revendications précédentes,
caractérisé en ce que
les moyens d'accouplement comprennent des éléments de liaison, en particulier des branches (35) qui les relient de manière articulée aux moyens de fermeture, ces éléments de liaison partant des moyens d'accouplement, de préférence à peu près perpendiculairement.

7. Module d'aspiration selon la revendication 6,
caractérisé en ce que
la zone élastique comprend des éléments de liaison qui sont reliés en particulier avec rigidité de forme aux moyens d'accouplement réalisés de préférence d'une seule pièce, cette zone élastique s'étendant en particulier sur toute la longueur des moyens d'accouplement.

8. Module d'aspiration selon la revendication 6,
caractérisé en ce que
les éléments de liaison sont reliés élastiquement ou de manière articulée, à une barre principale (17) et/ou d'autres composants des moyens d'accouplement, et ils présentent de préférence une rigidité de forme et la zone élastique se trouve dans la liaison.

9. Module d'aspiration selon l'une quelconque des revendications précédentes,
caractérisé en ce que
les moyens de fermeture sont des clapets, en particulier des clapets essentiellement ronds (13), pouvant tourner autour d'un axe (14), et ils peuvent être articulés avantageusement par des leviers d'articulation (16) et des articulations sphériques (27, 28) faisant partie des moyens d'accouplement ou des éléments de liaison.

10. Module d'aspiration selon l'une quelconque des revendications précédentes,
caractérisé en ce que
tous les moyens de fermeture occupent pratiquement la même position et il est prévu en particulier deux positions, à savoir une « FERME » et une « OUVERT » qui peuvent être atteintes avantageusement grâce à la compensation des tolérances, ces positions étant définies par des butées.

11. Module d'aspiration selon l'une quelconque des revendications précédentes,
caractérisé par
des organes de manoeuvre opérant en rotation et un mouvement essentiellement de translation des moyens d'accouplement, cette conversion de mouvement se faisant par l'intermédiaire d'une broche d'excentrique ou d'un tourillon d'articulation (30) portée par les organes de manoeuvre et par une ouverture de réception (37) portée par les moyens d'accouplement, avantageusement en un mouvement longitudinal, en particulier essentiellement selon la direction de l'axe longitudinal des moyens d'accouplement.

12. Module d'aspiration selon l'une quelconque des revendications 3 ou 7 à 11,
caractérisé en ce que
les moyens d'accouplement sont constitués de plusieurs barres principales (17) d'où partent, en ramification, des branches (35) servant d'éléments de liaison avec les moyens de fermeture en forme de clapets (13), les barres principales étant articulées entre elles et la zone élastique étant constituée par un amincissement de la matière (20) dans la liaison avec les branches, tandis que la manoeuvre de deux barres principales à chacune desquelles sont reliés deux clapets, est assurée par une troisième barre principale reliée aux deux premières, toutes ces barres étant de préférence identiques.

13. Module d'aspiration selon au moins l'une quelconque des revendications 4 à 11,
caractérisé en ce que
les moyens d'accouplement sont monoblocs avec une barre principale (17) et avec des branches (35) qui partent perpendiculairement de celle-ci pour assurer la liaison avec les moyens de fermeture en forme de clapets (13), la zone élastique est constituée par un rétrécissement de la section des branches par rapport à celle de la barre principale et de leur partie verticale, l'actionnement essentiellement en direction de la barre principale étant assuré par un moteur de réglage par l'intermédiaire d'un tourillon d'excentrique (30) situé du côté de commande et d'une ouverture de réception (37) moulée, perpendiculairement à la barre principale.

14. Module d'aspiration selon au moins l'une quelconque des revendications précédentes,
caractérisé en ce que
les moyens d'accouplement et/ou les éléments de liaison sont fabriqués de préférence par injection d'une matière plastique notamment d'une matière thermoplastique.

15. Module d'aspiration selon au moins l'une quelconque des revendications précédentes,
caractérisé en ce qu'
à chaque canal d'aspiration (12) est associée une fente annulaire (24) à laquelle peuvent être amenés des gaz provenant de la ventilation du carter de vilebrequin, du retour des gaz d'échappement ou de la ventilation du réservoir de carburant.

16. Module d'aspiration selon au moins l'une quelconque des revendications précédentes,
caractérisé en ce qu'
il est prévu, sur la face frontale du module d'aspiration (11) située en face du moteur à combustion interne, un joint d'étanchéité (31) jiouant le rôle d'élément compensateur des tolérances et placé de préférence entre un support de clapet (33) sous forme d'insert logé dans un canal d'aspiration (12), et le boîtier du module d'aspiration (32).
